# EUROPÄISCHE PATENTSCHRIFT

(11) **EP 0 552 465 B1**
(45) Veröffentlichungstag und Bekanntmachung des Hinweises auf die Patenterteilung: **15.05.1996**
(21) Anmeldenummer: 92121251.0
(22) Anmeldetag: 14.12.1992
(51) Int. Cl.: H01M 10/39, H01M 4/70

(54) **Elektrochemische Speicherzelle**
Electrochemical energy storage cell
Elément de stockage d'énergie électrochimique

(30) Priorität: 24.12.1991 DE 4142968
(43) Veröffentlichungstag der Anmeldung: 28.07.1993
(73) Patentinhaber: ABB PATENT GmbH, D-68309 Mannheim (DE)
(72) Erfinder: Maldonado-Zagal, Sigisfredo, Dr., W-6900 Heidelberg (DE)
(74) Vertreter: Rupprecht, Klaus, Dipl.-Ing.

(56) Entgegenhaltungen:
- EP-A- 0 014 282
- EP-A- 0 187 305
- GB-A- 1 472 975
- EXTENDED ABSTRACTS, Band 87-2, Nr. 109, 18. Oktober 1987, PRINCETON, NEW JERSEY US Seiten 157 - 158 , XP000115006 HIROYUKI KAWAMOTO 'EFFECT OF VOIDS IN SULFUR ELECTRODE UPON PERFORMANCES OF SODIUM-SULFUR CELL'
- PATENT ABSTRACTS OF JAPAN, Band 11, no. 204 (E-520)(2651), 02. Juli 1987 & JP-A-62 026 768 ( TOKYO ELECTRIC POWER CO )

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Hochenergiespeicherbatterien, die zur Stromversorgung von Elektrofahrzeugen vorgesehen sind.

Ein Beispiel für diese Speicherzellen sind solche auf der Basis von Natrium und Schwefel, die wiederaufladbar sind, und einen Festelektrolyten aus Beta-Aluminiumoxid besitzen, der den Anodenraum vom Kathodenraum trennt. Als Vorteil dieser Speicherzellen ist hervorzuheben, daß beim Aufladen derselben keine elektrochemischen Nebenreaktionen ablaufen. Der Kathodenraum dieser Speicherzellen dient zur Aufnahme einer Schwefelelektrode, die im wesentlichen durch einen Filz gebildet wird, der mit Schwefel getränkt ist. Dieser Filz kann aus Graphit, Kohlenstoff oder Pechfasern gefertigt sein. Bis heute ist es üblich die Schwefelelektrode zweiteilig auszubilden. Der zur Ausbildung der Schwefelelektrode verwendete Filz besteht aus zwei Hälften, die mit Schwefel getränkt und zu jeweils einer Halbschale geformt werden. Beim Aufheizen der Speicherzelle über den Schmelzpunkt des Schwefels hinaus, der bei 119°C liegt, kann der bei der Herstellung komprimierte Filz expandieren. Es ergibt sich ein niedriger Zellwiderstand, der durch einen niedrigen Kontaktwiderstand zwischen dem Filz und den beidseitig angrenzenden Bauelementen der Speicherzelle bewirkt wird. Die bis jetzt verwendeten Schwefelelektroden weisen jedoch den Nachteil auf, daß beim Aufschmelzen des Schwefels und dem Expandieren des Filzes eine mangelhafte Kontaktierung des Filzes mit den angrenzenden Bauelementen erfolgt, bzw. zwischen den beiden Filzteilen ein unüberbrückter Spalt verbleibt. Diese Inhomogenitäten führen zu einer schlechten Stromverteilung, elektrischen Ungleichmäßigkeiten beim Auf- und Entladen der Speicherzelle sowie zu lokalen Korrosionen und zum Auftreten von Schwefelmangel bzw. Polysulfidmangel an Stellen schlechter Kontaktierung.

Aus der GB-A-0014282 ist eine elektrochemische Speicherzelle mit einer speziell ausgebildeten Schwefelelektrode bekannt. Diese wird durch eine Schicht aus Fasern gebildet. Diese Faserschicht wird derart gepreßt, daß trapezförmige Segmente entstehen. Anschließend wird die Schicht zu einer zylinderförmigen Schwefelelektrode geformt. Bei der Ausbildung der trapezförmigen Segmente wird das faserförmige Material teilweise verdichtet um die gewünschte Form der Segmente zu erzielen.

in der EP-A-0187305 ist eine elektrochemische Speicherzelle beschrieben, bei der die Dicke der Schwefelelektrode und die Wandstärke des Festelektrolyten so ausgebildet sind, daß zwischen diesen beiden Größen ein bestimmtes Verhältnis p gebildet wird. Das für die Bildung der Schwefelelektrode verwendete Material wird vor dem Einfüllen in den Kathodenraum mit Schwefel getränkt, verpreßt und dann gemahlen, so daß es später eine Porosität von 10 bis 50% aufweist. Die Schwefelelektrode kann auch durch zwei Halbschalen gebildet werden, die aus faserförmigen Graphit oder Kohlenstoff gefertigt sind.

Der Erfindung liegt die Aufgabe zugrunde, eine elektrochemische Speicherzelle zu schaffen, bei der eine optimale Kontaktierung der Schwefelelektrode mit den angrenzenden Bauteilen sichergestellt wird.

Diese Aufgabe wird erfindungsgemäß durch die Merkmale des Patentanspruches 1 gelöst.

Die erfindungsgemäße Speicherzelle weist eine Schwefelelektrode auf, die eine gleichmäßige Materialverteilung, eine gleichmäßige Porosität sowie einen gleichmäßig niedrigen Kontaktwiderstand besitzt. Hierdurch wird die Wiederaufladbarkeit der Speicherzelle verbessert und eine gleichmäßige Stromdichte innerhalb der Schwefelelektrode sichergestellt. Gleichzeitig wird die Lebensdauer der Speicherzelle verlängert und ihre Anfälligkeit gegenüber Korrosion reduziert. Weitere erfindungswesentliche Merkmale sind in den Unteransprüchen gekennzeichnet.

Der Erfindung wird nachfolgend anhand von schematischen Zeichnungen näher erläutert.

Es zeigen:
- Fig. 1: einen Vertikalschnitt durch eine nicht inverse Speicherzelle,
- Fig. 2: einen zur Ausbildung der Schwefelelektrode verwendeten Filz,
- Fig. 3: eine zu einer Halbschale gepreßte Filzmatte,
- Fig. 4: eine weitere Ausgestaltung des zur Ausbildung der Schwefelelektrode verwendeten Filzes,
- Fig. 5: eine dritte Variante des Filzzuschnittes zur Ausbildung der Schwefelelektrode,
- Fig. 6: eine inverse Speicherzelle,

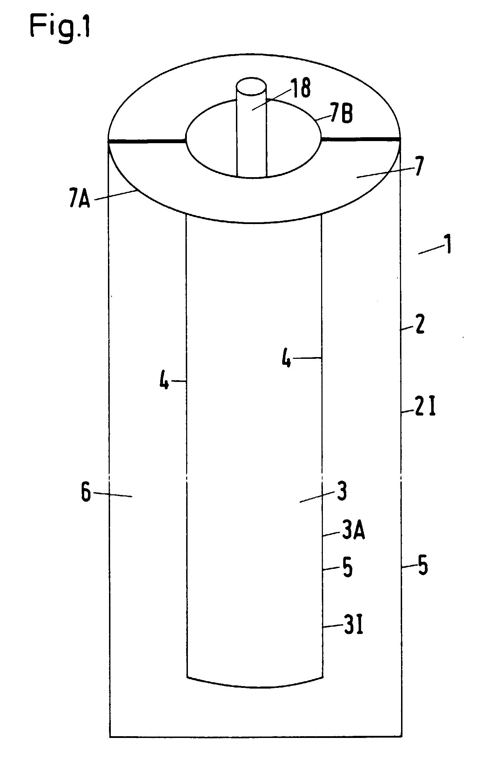

Die in Fig. 1 dargestellte elektrochemische Speicherzelle 1 wird nach außen hin von einem Gehäuse 2 begrenzt, das becherförmig ausgebildet ist. Im Inneren des Gehäuses 2 ist ein Festelektrolyt 3 angeordnet, der ebenfalls die Form eines Bechers aufweist. Das Innere des Festelektrolyten 3 dient als Anodenraum 4. Zwischen dem Gehäuse 2 und dem Festelektrolyten 3 ist ein Ringraum 5 vorgesehen, der als Katodenraum dient. Dieser Ringraum 5 dient zur Aufnahme der Schwefelelektrode 6. Die Schwefelelektrode wird durch zwei Filzmatten gebildet, deren Längen an die Höhe des Katodenraums 5 angepaßt sind. Die Fasern bzw. Teilchen, welche die Filzmatten 7 bilden, können aus Graphit, Polyacrylnitril, Zellulose oder Pech gefertigt sein. Andere Materialien, welche die gleichen Eigenschaften aufweisen, können zur Ausbildung der Filzmatten ebenfalls verwendet werden. Zur Ausbildung der Schwefelelektrode werden zwei etwa gleichgroße Filzmatten 7 verwendet. Diese Filzmatten werden mit Schwefel getränkt und zu Halbschalen gepreßt. Nach dem Einsetzen der Filzmatten 7 in den Katodenraum 5, und nach der Inbetriebnahme der Speicherzelle 1, können sich die Filzmatten oberhalb einer Temperatur von 119°C ausdehnen. Bei der Herstellung der Halbschalen (hier nicht dargestellt) wird die Dicke der Filzmatten 7 so gewählt, daß ihre beiden Oberflächen eng an den angrenzenden Bauelementen, in diesem Fall an die Innenflächen 2I des Gehäuses 2 und an die Außenflächen 3A des Festelektrolyten 3 anliegen. Wie anhand von Fig. 1 zu sehen ist, ist der Innendurchmesser des Gehäuses 2 größer als der Außendurchmesser des Festelektrolyten 3. Damit die Filzmatten 7 nach dem Expandieren auch mit ihrer gesamten Oberfläche 7B in einem engen Kontakt mit dem Festelektrolyten 3 stehen, wird jede Filzmatte 7 vor dem Pressen zusätzlich bearbeitet.

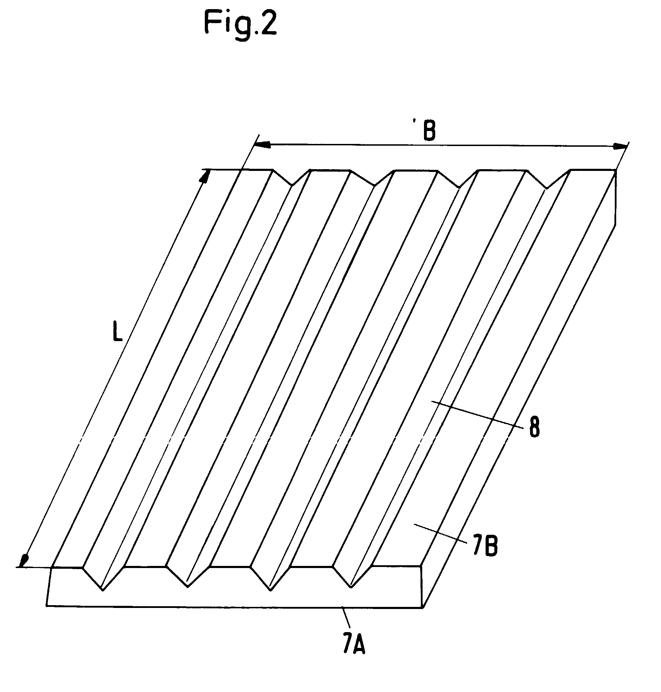

Fig. 2 zeigt eine Filzmatte 7, welche die Länge L und die Breite B aufweist. Die Breite B der zu bearbeitenden Filzmatte 7 ist so gewählt, daß sie halb so groß ist, wie der Innenumfang 2I des Gehäuses 2 der in Fig. 1 dargestellten Speicherzelle 1. Hierdurch wird erreicht, daß die Matte 7 nach der Inbetriebnahme der Speicherzelle 1 die Innenfläche des Gehäuses 2 hälftig überdeckt und mit dieser in direktem Kontakt steht. Damit nach der Inbetriebnahme der Speicherzelle 1 auch die zweite Oberfläche 7B der Matte 7 vollständig mit der Außenfläche des Festelektrolyten 3 in Kontakt steht, und die Ausbildung von Falten unterbunden werden, wird die Oberfläche 7B der Matte 7 mit V-förmigen Einschnitten versehen, die sich über die gesamte Länge L der Matte 7 erstrecken. Bei dem hier dargestellten Ausführungsbeispiel der Matte 7 sind die V-förmigen Einschnitte 8 in definiertem Abstand voneinander über die gesamte Breite B der Matte verteilt. Die Tiefe der Einschnitte 8 beträgt etwa 60 % der gesamten Dicke der Matte 7. Das sich in den V-förmigen Einschnitten befindliche Filzmaterial wird entfernt.

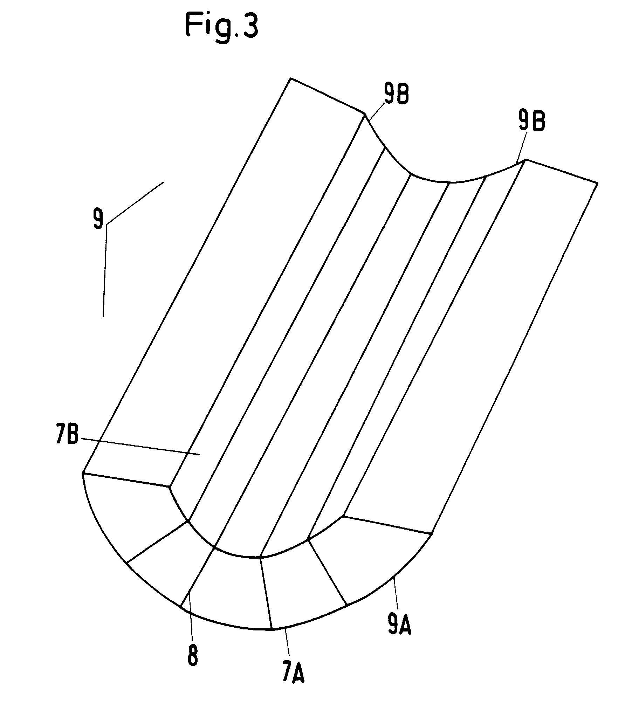

Anschließend wird die Filzmatte 7 mit Schwefel getränkt und zu der in Fig. 3 dargestellten Halbschale 9 gepreßt. Die Pressung erfolgt in der Weise, daß die Oberfläche 7A der Matte 7 die Außenfläche 9A der Halbschale 9 und die Oberfläche 7B die Innenfläche 9B der Halbschale 9 bildet. Durch die Entfernung des Materials in den keilförmigen Einschnitten 8, wird die Abmessung der Oberfläche 7B reduziert. Die Anzahl der keilförmigen Einschnitte 8 wird so gewählt, daß die wirksame Oberfläche 9B der Halbschale 9 nach der Inbetriebnahme der Speicherzelle 1 die Außenfläche 3A des Festelektrolyten 3 der in Fig. 1 dargestellten Speicherzelle zur Hälfte überdeckt, und in allen Bereichen einen unmittelbaren Kontakt mit dem Festelektrolyten 3 hat. Die Anzahl der keilförmigen Einschnitte 8 liegt zwischen ein und zehn, vorzugsweise zwei bis sechs. Die Breite der V-förmigen Einschnitte 8 wird durch das Verhältnis der Filzbreite zur Anzahl der V-förmigen Einschnitte 8 bestimmt.

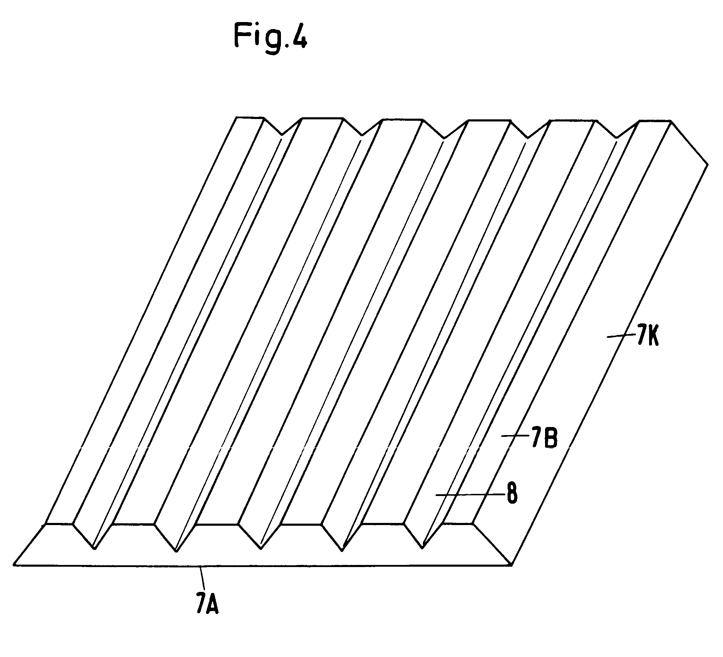

Fig. 4 zeigt eine weitere Filzmatte 7, bei der zur Verringerung der wirksamen Oberfläche 7B die Längskanten 7K von der Oberfläche 7A zur Oberfläche 7B hin abgeschrägt sind. Zusätzlich sind keilförmige Einschnitte 8 vorgesehen, aus denen das Filzmaterial entfernt ist. Eine aus dieser Filzmatte 7 gepreßte Halbschale weist ebenfalls zwei Oberflächen 7A und 7B auf, die unterschiedlich groß sind, und sicherstellen, daß sowohl ein vollständiger Kontakt mit der Innenfläche 2I des Gehäuses 2 als auch mit der Außenfläche 3A des Festelektrolyten 3 erzielt wird.

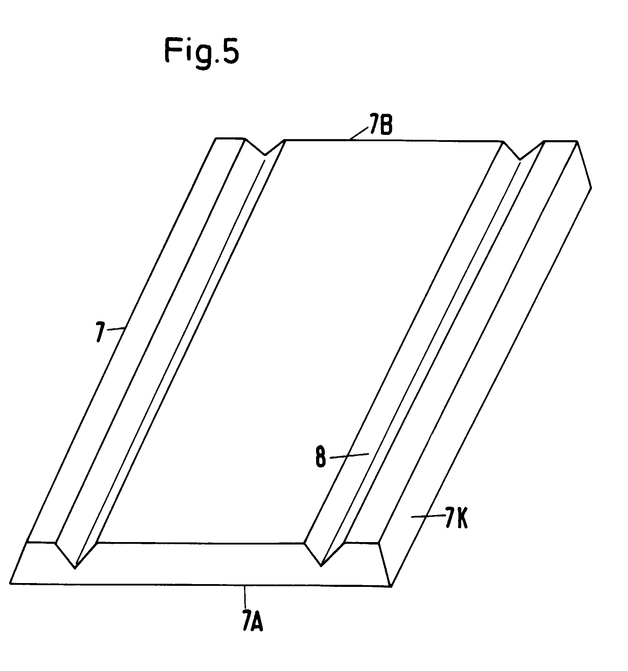

Fig. 5 zeigt eine dritte Bearbeitungsvariante der Filzmatte 7. Hierbei ist die Filzmatte 7 lediglich im Bereich ihrer Längskanten 7K von der Oberfläche 7A zur Oberfläche 7B hin abgeschrägt. Sollte diese Abschrägung der Kanten 7K nicht ausreichen, besteht die Möglichkeit, im unmittelbaren Grenzbereich dieser Kanten 7K ein oder zwei V-förmige Einschnitte 8 auszubilden, die sich auch hierbei über die gesamte Länge der Filzmatte 7 erstrecken. Zusätzliche Einschnitte 8 (hier nicht dargestellt) beidseitig der Längsachse der Matte 7 können ebenfalls noch ausgebildet werden.

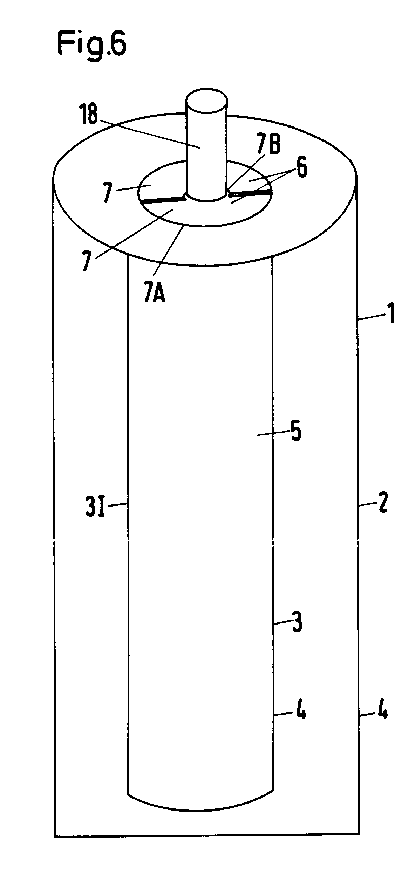

Fig. 6 zeigt eine inverse Speicherzelle 1, die ebenfalls von einem becherförmigen Gehäuse 2 nach außen hin begrenzt ist. Im Inneren der Speicherzelle 1 befindet sich wiederum ein natriumionenleitender Festelektrolyt 3, der becherförmig ausgebildet ist. Ein zwischen dem Gehäuse 2 und dem Festelektrolyten 3 vorgesehener Ringraum 4 dient als Anodenraum. Der Innenbereich des Festelektrolyten bildet den Katodenraum 5, in den die Schwefelelektrode 6 eingesetzt ist. Diese ist um einen Stromkollektor 18 angeordnet, der innerhalb des Festelektrolyten 3 mittig angeordnet und bis nahe zum geschlossenen Ende des Festelektrolyten 3 geführt ist. Er ragt zusätzlich einige Millimeter aus der Speicherzelle 1 heraus. Damit auch bei dieser inversen Speicherzelle 1 ein enger Kontakt zwischen der Schwefelelektrode 6 und dem Festelektrolyten 3 sowie dem Stromkollektor 18 gegeben ist, werden die zur Ausbildung der Schwefelelektrode 6 verwendeten Filzmatten 7 in gleicher Weise bearbeitet, wie in den Figuren 2, 4 und 5 dargestellt und in den zugehörigen Beschreibungen erläutert. Die Filzmatten 7 werden so gewählt, daß ihre ursprüngliche Breite B dem halben Umfang der Innenfläche 3I des Festelektrolyten 3 entspricht. Durch die Ausbildung von keilförmigen Einschnitten wird die Größe der zweiten wirksamen Oberfläche 7B, die an den Stromkollektor 18 angrenzt, soweit reduziert, daß bei der Inbetriebnahme der Speicherzelle die Schwefelelektrode 6 mit ihren beiden Oberflächen überall und gleichmäßig in engem Kontakt mit dem Festelektrolyten 3 und dem Stromkollektor 18 steht.

## Patentansprüche

1. Elektrochemische Speicherzelle (1) auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse begrenzt sind, wobei die im Kathodenraum (5) angeordnete Schwefelelektrode (6) durch zwei mit Schwefel getränkte und zu Halbschalen gepreßte Filzmatten (7) gebildet ist, dadurch gekennzeichnet, daß die Länge einer jeden Filzmatte (7) an die Höhe des jeweiligen Kathodenraums (5) angepaßt und die ursprüngliche Breite (B) einer jeden Filzmatte (7) an den halben Umfang des an die Schwefelelektrode (6) nach außen unmittelbar angrenzenden Bauteils (2,3) angepaßt ist, daß die wirksame Breite der jeweils zweiten nach innen weisenden Oberfläche (7B) der Filzmatte (7) durch V-förmige Einschnitte (8) und die Entnahme des ausgeschnittenen Materials auf den halben Umfang des nach innen an die Schwefelelektrode (6) angrenzenden Bauteils (3,18) reduziert ist, daß sich die V-förmigen Einschnitte (8) über die gesamte Länge (L) einer Filzmatte (7) erstrecken und die Tiefe der Einschnitte (8) 60% der Dicke einer Filzmatte (7) beträgt, und daß die Breite der V-förmigen Einschnitte (8) durch das Verhältnis der ursprünglichen Breite der Filzmatte (7) zur Anzahl der V-förmigen Einschnitte bestimmt ist.

2. Elektrochemische Speicherzelle nach Anspruch 1, dadurch gekennzeichnet, daß die zweite Oberfläche (7B) einer jeden Filzmatte (7) mit ein bis zehn V-förmigen Einschnitten (8) versehen ist.

3. Elektrochemische Speicherzelle nach einem der Ansprüche 1 oder 2, dadurch gekennzeichnet, daß die V-förmigen Einschnitte (8) in definiertem Abstand über die gesamte Breite einer jeden Filzmatte (7) verteilt sind.

4. Elektrochemische Speicherzelle nach einem der Ansprüche 1 bis 3, dadurch gekennzeichnet, daß die V-förmigen Einschnitte (8) beidseitig der Längsachse und beidseitig der Längskante (7K) einer jeden Filzmatte (7) angeordnet sind.

5. Elektrochemische Speicherzelle nach einem der Ansprüche 1 bis 4, dadurch gekennzeichnet, daß die V-förmigen Einschnitte (8) beidseitig der Längskanten (7K) einer jeden Filzmatte (7) angeordnet sind.

6. Elektrochemische Speicherzelle (1) nach Anspruch 1, dadurch gekennzeichnet, daß die Länge einer jeden Filzmatte (7) an die Höhe des jeweiligen Kathodenraums (5) angepaßt und die ursprüngliche Breite (B) einer jeden Filzmatte (7) an den halben Umfang des an die Schwefelelektrode (6) nach außen unmittelbar angrenzenden Bauteils (2,3) angepaßt ist, und daß die wirksame Breite der jeweils zweiten nach innen weisenden Oberfläche (7B) der Filzmatte (7) durch das Abschrägen der Längskanten (7K) von der ersten Oberfläche (7A) zur zweiten Oberfläche (7B) hin auf den halben Umfang des nach innen angrenzenden Bauteils (3,18) reduziert ist.

7. Elektrochemische Speicherzelle nach einem der Ansprüche 1 bis 6, dadurch gekennzeichnet, daß jede Filzmatte (7) aus Fasern oder Teilchen aus Polyacrylnitril, Zellulose, Pech oder Graphit gefertigt ist.

## Claims

1. Electrochemical storage cell (1) based on sodium and sulphur having an anode space (4) and a cathode space (5) which are separated from one another by an alkali-ion-conducting solid electrolyte (3) and are bounded at least in some areas by a metallic housing, the sulphur electrode (6) disposed in the cathode space (5) being formed by two felt mats (7) impregnated with sulphur and pressed into half shells, characterised in that the length of each felt mat (7) is matched to the height of the respective cathode space (5) and the original width (B) of each felt mat (7) is matched to half the circumference of the component (2, 3) immediately adjacent to the sulphur electrode (6) on the outside, in that the active width of the respective second, inwardly pointing surface (7B) of the felt mat (7) is reduced to half the circumference of the component (3, 18) adjacent to the sulphur electrode (6) on the inside by V-shaped incisions (8) and the removal of the material cut out, in that the V-shaped incisions (8) extend over the entire length (L) of a felt mat (7) and the depth of the incisions (8) is 60 % of the thickness of a felt mat (7), and in that the width of the V-shaped incisions (8) is determined by the ratio of the original width of the felt mat (7) to the number of V-shaped incisions.

2. Electrochemical storage cell according to Claim 1, characterised in that the second surface (7B) of each felt mat (7) is provided with one to ten V-shaped incisions (8).

3. Electrochemical storage cell according to one of Claims 1 or 2, characterised in that the V-shaped incisions (8) are distributed at a defined distance over the entire width of each felt mat (7).

4. Electrochemical storage cell according to one of Claims 1 to 3, characterised in that the V-shaped incisions (8) are disposed on either side of the longitudinal axis and on either side of the longitudinal edge (7K) of each felt mat (7).

5. Electrochemical storage cell according to one of Claims 1 to 4, characterised in that the V-shaped incisions (8) are disposed on either side of the longitudinal edges (7K) of each felt mat (7).

6. Electrochemical storage cell (1) according to Claim 1, characterised in that the length of each felt mat (7) is matched to the height of the respective cathode space (5) and the original width (B) of each felt mat (7) is matched to half the circumference of the component (2, 3) immediately adjacent to the sulphur electrode (6) on the outside, and in that the active width of the respective second, inwardly pointing surface (7B) of the felt mat (7) is reduced to half the circumference of the component (3, 18) adjacent on the inside by the chamfering of the longitudinal edges (7K) from the first surface (7A) towards the second surface (7B).

7. Electrochemical storage cell according to one of Claims 1 to 6, characterised in that each felt mat (7) is made of fibres or particles comprising polyacrylonitrile, cellulose, pitch or graphite.

## Revendications

1. Elément (1) électrochimique de stockage d'énergie à base de sodium et de soufre avec une chambre d'anode (4) et une chambre de cathode (5) qui sont séparées l'une de l'autre par un électrolyte solide (3) conducteur d'ions alcalins et sont délimitées au moins localement par une enveloppe métallique, l'électrode de soufre (6) disposée dans la chambre de cathode (5) étant formée de deux mats (7) de feutre imprégnés de soufre et mis en forme par pression de manière à obtenir des demi-coquilles, caractérisé par le fait que la longueur de chaque mat (7) de feutre est adaptée à la hauteur de la chambre de cathode (5) concernée et la largeur (B) d'origine de chaque mat (7) de feutre est adaptée au demi périmètre de l'élément (2,3) immédiatement voisin, côté extérieur, de l'électrode en soufre (6), par le fait que la largeur efficace de la deuxième surface (7B), tournée vers l'intérieur, du mat (7) de feutre est réduite par des entailles (8) en V et par l'élimination du matériau découpé sur le demi périmètre de l'élément (3, 18) contigu, côté intérieur, à l'électrode en soufre (6), par le fait que les entailles (8) en V s'étendent sur la totalité de la longueur (L) d'un mat (7) de feutre et la profondeur des entailles (8) représente 60 % de l'épaisseur d'un mat (7) de feutre et par le fait que la largeur des entailles (8) en V est déterminée par le rapport de la largeur d'origine du mat (7) de feutre au nombre d'entailles en V.

2. Elément électrochimique de stockage d'énergie selon la revendication 1, caractérisé par le fait que la deuxième surface (7B) de chaque mat (7) de feutre est pourvue d'une à dix entailles (8) en V.

3. Elément électrochimique de stockage d'énergie selon l'une des revendications 1 ou 2, caractérisé par le fait que les entailles (8) en V sont réparties avec un espacement déterminé sur toute la largeur de chaque mat (7) de feutre.

4. Elément électrochimique de stockage d'énergie selon l'une des revendications 1 à 3, caractérisé par le fait que les entailles (8) en V sont disposées de part et d'autre de l'axe longitudinal et de part et d'autre du bord longitudinal (7K) de chaque mat (7) de feutre.

5. Elément électrochimique de stockage d'énergie selon l'une des revendications 1 à 4, caractérisé par le fait que les entailles (8) en V sont disposées de part et d'autre des bords longitudinaux (7K) de chaque mat (7) de feutre.

6. Elément (1) électrochimique de stockage d'énergie selon la revendication 1, caractérisé par le fait que la longueur de chaque mat (7) de feutre est adaptée à la hauteur de la chambre de cathode (5) concernée et la largeur d'origine (B) de chaque mat (7) de feutre est adaptée au demi périmètre de l'élément (2, 3) immédiatement voisin côté extérieur de l'électrode en soufre (6) et par le fait que la largeur efficace de la deuxième surface (7B), tournée vers l'intérieur, du mat (7) de feutre est réduite par la coupe en biais des bords longitudinaux (7K), de la première surface (7A) vers la deuxième surface (7B), sur le demi périmètre de l'élément (3, 18) contigu côté intérieur.

7. Elément électrochimique de stockage d'énergie selon l'une des revendications 1 à 6, caractérisé par le fait que chaque mat (7) de feutre est fabriqué à partir de fibres ou de particules de polyacrylonitrile, de cellulose, de poix ou de graphite.
